# EUROPÄISCHE PATENTANMELDUNG

(11) **EP 1 628 186 A1**
(43) Veröffentlichungstag der Anmeldung: **22.02.2006**
(21) Anmeldenummer: 05107423.5
(22) Anmeldetag: 12.08.2005
(51) Int. Cl.: G06F 1/00

(54) **Verfahren zur Zugangskontrolle auf Daten**

(30) Priorität: 20.08.2004 AT 6122004 U
(71) Anmelder: Muncke, Marc, 1020 Wien (AT)
(72) Erfinder: Muncke, Marc, 1020 Wien (AT)
(74) Vertreter: KLIMENT & HENHAPEL

(57) **Zusammenfassung**

Verfahren zur Zugangskontrolle auf Daten, die in Form von Dateien mit jeweils einer eindeutigen Kennzeichnung auf einem Speichermedium WS gespeichert sind, und auf die mithilfe dieser Kennzeichnung über ein Kommunikationsnetzwerk, das von zumindest einer Arbeitseinheit AS, insbesondere ein Server, und zumindest einer Endnutzereinheit gebildet wird, zugegriffen werden kann, wobei in einem ersten Verfahrensschritt der jeweiligen Kennzeichnung eine öffentliche Adresse zugeordnet wird, bei deren Anwahl der Endnutzer auf die Arbeitseinheit AS umgeleitet wird. Erfindungsgemäß ist vorgesehen, dass die Arbeitseinheit AS in zeitlich definierten Abständen auf das Speichermedium WS zugreift und eine modifizierte Kennzeichnung erstellt, wobei bei Anwahl der öffentlichen Adresse durch den Endnutzer im Falle dessen ausreichender Authorisierung von der Arbeitseinheit AS die modifizierte Kennzeichnung mitgeteilt wird, mithilfe derer dem Endnutzer bis zur nächsten Modifizierung der Kennzeichnung durch die Arbeitseinheit AS ein direkter Zugang auf die entsprechende Datei des Speichermediums WS ermöglicht wird.

## Beschreibung

Die Erfindung betrifft ein Verfahren zur Zugangskontrolle auf Daten, die in Form von Dateien mit jeweils einer eindeutigen Kennzeichnung auf einem Speichermedium gespeichert sind, gemäß dem Oberbegriff von Anspruch 1.

Die Entwicklung der elektronischen Datenverarbeitung hat sich in den letzten Jahrzehnten weg vom Einzelplatzrechner hin zu mittels Kommunikationsnetzwerken vernetzten Rechnern über LAN (Local Area Network) und WAN (Wide Area Networks) bis hin zum weltumspannenden Internet entwickelt. Das Internet besteht aus Information Service Providern (ISP) die dem Endverbraucher, der im folgenden auch als Endnutzer bezeichnet wird, aber auch gewerblichen Kunden eine Zugangsinfrastruktur via öffentlicher Kommunikationsnetze (Telefonnetz) über Gateways und Router zu eigenen und/oder anderen Teilen eines oder mehrerer Kommunikationsnetzwerke ermöglichen. Die Kommunikation beruht in der Regel auf einem Mehrschichtmodell (auf "Layern"-basierendes ISO-OSI-Modell mit den zugehörigen "RFCs", z.B. RFC 871), welches für verschiedene Arten von Anwendungen und Inhalten eine einfache Datenübertragung erlaubt. Der sogenannte "Application Layer" etwa ermöglicht einer Vielzahl von Anwendungen die passende Kommunikation über ein Netzwerk (HTTP,HTTPS, SSH, FTP etc.).

Eines dieser Protokolle ist das Hypertext Transfer Protocol (HTTP), das die Kommunikation zwischen einer Endnutzereinheit zur Anzeige (Terminal) und einem Server, der Anfragen bearbeitet und entsprechende Antworten an das Terminal zurückliefert, standardisiert abwickelt. In der Regel besteht Information im Internet aus Dateien, die Formatierungsinformationen und Inhaltsinformationen im ASCII-Format in der sogenannten "Hypertext Markup Language" (HTML) übertragen. Ein Browser ist ein Programm, das es erlaubt, an einer Anzeigeeinrichtung (Terminal) die Inhaltsinformationen unter Berücksichtigung der spezifizierten HTML-Formatcodes (Tags) anzuzeigen.

Derartige HTML-Dokumente haben zwei wesentliche Vorteile, deren Eigenschaften die vorliegende Erfindung möglich machen und anhand derer die Grundzüge der Erfindung dargestellt werden sollen. Der erste Vorteil ist, dass mittels eines Uniform Resource Locators (URL) eine bestimmte Uniform Resource Information (URI) definiert wird, mit deren Hilfe es möglich ist, über ein spezifiziertes Protokoll exakt definierte Inhalte zu übertragen und in jedem an das Internet angeschlossene Gerät, auf welchem ein HTML-Browser, der das verwendete Protokoll unterstützt, als Programm installiert ist, angezeigt werden kann. Diese URL lassen sich in einem aktiven Modus anzeigen in der Gestalt, dass ein Teil eines Browsers aus einem Texteingabefeld besteht, in welches eine URL manuell eingegeben wird, um eine Resource anzufordern, und in einem passiven Modus, der Resourcen auf Benutzeranfrage mittels Hyperlinks, also in HTML codierte URLs automatisch oder auf Benutzeranforderung nachliefert. Der zweite Vorteil ist, dass über weitere Protokolle (HTTP, aber auch FTP, etc.) andere multimediale Inhalte abgerufen und entweder im Browser selbst dargestellt werden können, oder mit einer sogenannten "Helper Applikation" und/oder einem "plug-in" zur Anzeige kommen können.

Dadurch haben sich eine Vielzahl von neuen Dateitypen und Inhaltstypen herausgebildet, die für die jeweiligen Inhalte eine optimale Darstellung erlauben. Der Informationsinhalt bzw. Typ der Datei lässt sich etwa als Audiodatei, Bilddatei, Filmdatei, Textdatei, ausführbare Datei, Datendatei, oder Mischungen davon klassifizieren. Dieser Dateityp wird in der Regel nach einer Dateiendung identifiziert, also lassen sich unter anderem folgende laut dieser Erfindung verwendbare Dateitypen exemplarisch darstellen:
Textdateien : TXT, DOC, PDF, HTML, ASCII, RTF, PHP, SQL etc.
Audiodateien : WAV, AIF, SNG, MP3, AAC, MPEG, OGG etc.
Bilddateien : BMP, TIF, JPEG, GIF, PSF, EPS etc.
Filmdateien : AVI, MOV, MPEG etc.
Datendateien : DB, DBF, ZIP, RAR, TAR, GZ, TGZ, FP5 etc.
Ausführbahre Dateien : EXE, BIN, SH, SO, JAVA, ASP, PHP, PL etc.

Die Dateien lassen sich durch einen Endnutzer unter Verwendung eines Terminals anzeigen und/oder abspielen und/oder im Inhalt und/oder ihrem Speicherort modifizieren. Als Datei ist in diesem Fall (Internet) auch ein sogenannter "stream" zu verstehen. Das ist eine Information, die zum Anzeigen/Abspielen abgerufen werden kann (Übertragung von Audio/Video-Information). Das gilt auch, falls der "stream" zur Aufzeichnung und erneutem Abspielen/Anzeigen auf einem Terminal oder Server gespeichert wird. Ebenso gelten alle in Anlehnung an die Spezifikation des Betriebssystems UNIX in als "Mountpoint" verfügbaren Verzeichnissen (z.B. /dev/ oder /media/ oder /hda/) ansprechbaren Dateien, also Daten auf an ein System angeschlossenen Geräten, die mit einem Speicherort in einem Dateisystem ansprechbar sind, als Datei. Eine Datei kann, muss aber nicht eine oder mehrere unter einer URL abrufbare Resource sein.

In den letzten Jahren ist die Technologie des Internet in seiner weiteren Verbreitung explosionsartig gewachsen und es gibt eine sehr große Anzahl von Haushalten, die mit einer entsprechenden Infrastruktur ausgestattet sind, um Inhalte aus dem Internet zu betrachten. Zudem nimmt die Kommunikationsgeschwindigkeit sehr schnell zu, was es inzwischen ermöglicht, selbst die Datenmenge digitaler Spielfilme in guter Qualität in Echtzeit an angeschlossene Endgeräte zu übertragen.

Diese Erhöhung der Geschwindigkeit hat einerseits zu erhöhter Nachfrage an multimedialen Inhalten geführt, andererseits stellt sich für Schöpfer von Urheberrechten derartiger Werke (in weitere Folge Datei genannt) oder allgemein Anbieter von Dateien die Frage, für Übertragung dieser Dateien an einen Endnutzer über den Weg des Internet ein entsprechendes Entgelt einzufordern, oder diese Übertragung an den Besitz bestimmter Rechte zu knüpfen, oder in irgendeiner anderen Form zu begrenzen. Zu diesem Zweck sind verschiedene Einrichtungen Stand der Technik, welche im folgenden dargestellt werden sollen, um die Vorzüge der vorliegenden Erfindung aufzuzeigen.

Um Inhalte im Internet zur Verfügung zu stellen, ist zunächst die Einrichtung eines Webspace, das heißt eines Speicherplatzes auf einem an das Internet angeschlossenen Gerätes erforderlich. Eine Einrichtung, die diese Inhalte im Internet auf Anfrage ausliefert, wird gemeinhin als "Webserver" bezeichnet, welcher zunächst nur die Aufgabe hat, Dateien, die seitens eines Terminal durch eine URL angefragt wurden, mittels des in der URL-Anfrage angegebenen Protokolls (HTTP) an ein Terminal zu senden und weitere einfache Kommunikationsaufgaben mit dem Terminal wahrzunehmen. Ein Webserver ist dabei in der Regel ein programmgesteuerter Prozess auf einem Computer oder ähnlichem Gerät. Dabei ist besonders hervorzuheben, das "Webspace" und "Webserver" zwei verschiedene Dinge sind, vor allem deswegen, weil zur Administration eines Webspace (also zur Verwaltung der Inhalte, die der Webserver auf Anfrage einer URL an einen Benutzer ausliefert) in der Regel eine Kommunikation zwischen einem Terminal des Anbieters und einem Server erforderlich ist.
Um Inhalte von einem Terminal zu einem Webspace mittels des Internet zu übertragen, ist also ein geeignetes Kommunikationswerkzeug und ein geeignetes Protokoll erforderlich, in der Regel das FTP-Protokoll.

Mit dem FTP-Protokoll ist es möglich, sich von einem Terminal aus mittels eines Authentifizierungsmechanismus als berechtigter Benutzer an einem Serverprozess (FTP-Server) anzumelden und Dateien zu übertragen, abzurufen und zu modifizieren. Durch das FTP-Protokoll ist also ein Webspace mit Dateien vom Anbieter zu beliefern. Kennt ein Benutzer die Authentifizierungsinformation für den Webspace des Anbieters, kann er auch mittels FTP-Protokoll Dateien abrufen. Somit wird die gewünschte Kontrolle eines Zugangs zu Dateien des Anbieters für einen Benutzer oder eine Gruppe von Benutzern reglementiert durch die Verwaltung der Zugangsinformationen für einen FTP-Server.

Wenn die Authentifizierungsinformation nur einer begrenzten Gruppe von Benutzern zugänglich ist, spricht man von einem "privaten FTP-Server". Es gibt allerdings auch FTP-Server, auf denen Speicherplatz durch einen "allgemein bekannten" Authentifizierungsmechanismus zum Speichern und Abrufen von Dateien für "jeden" Benutzer zur Verfügung steht, sogenannte "anonymous FTP-Server". Jeder Apparat, auf dem ein Webserver läuft, besitzt also in der Regel auch eine Art FTP-Server, der berechtigten Benutzern den Zugriff auf den Speicherplatz erlaubt. Andere bekannte Services dieser Art sind etwa Telnet, ssh, scp, etc. Die Verwaltung von Benutzerrechten via Administration des FTP-Servers ist allerdings äußerst unpraktisch, wird aber z.B. in sogenannten "newsgroups" häufig praktiziert.

Erwirbt man einen Webspace bei einem ISP, so erhält man in der Regel nur eine einzige berechtige Benutzerkennung, die der Anbieter möglichst nicht veröffentlichen sollte, falls er keine unauthorisierte Modifikation am vom Webserver gespeicherten und somit auch an Benutzer des Internet ausgelieferten Inhalt wünscht. Um die Administration von Benutzerrechten in diesem Fall zu vereinfachen, bieten übliche Webserver einen eingebauten Authentifizierungsmechanismus an, der z.B. bei Aufruf bestimmter URLs zunächst eine Kombination aus Benutzernamen und Kennwort abfragt, und die unter einer URL angefragte Datei nur ausliefert, wenn diese Kombination vom Eigentümer vorher als berechtigt dem Webserver bekannt gemacht wurde (z.B..htaccess).

Dies stellt einen sehr einfachen Authentifizierungsmechanismus dar, aber selbst dieser ist bereits mit erheblichem Administrationsaufwand verbunden. Außerdem ermöglicht nicht jeder von einem ISP angebotene Webspace diese Form der Authentifizierung, da jeder Benutzer manuell eingetragen werden muss, und das würde sich im Fall vom Verkauf von Dateien als absolut unpraktikabel herausstellen. Daher wurde eine programmgesteuerte Authentifizierung und Transaktionssteuerung vorgeschlagen, die sich in den meisten Webservern mittels eines Interface zur Programmsteuerung (z.B. CGI, "Common Gateway Interface") und angeschlossenen Datenbanksystemen realisieren lässt.

Nun sieht sich ein Anbieter von digitalen Inhalten mit einer Vielzahl von technischen Möglichkeiten zur Steuerung von Programmen (PHP, Python, Perl, ASP, .Net, tcl/tk, JSP etc.), zur Verwaltung von Transaktionen (Cookies, URL-Encoded Transaction-Token, Sessionverwaltung etc. ), zur Verwaltung der Benutzerdaten in Datenbanken (Oracle, MySQL, Interbase, DB2 etc.) konfrontiert. Wenn er davon ausgehen kann, dass er z.B. durch den Verkauf einer Vielzahl von Kopien seiner Dateien auch einen entsprechenden Umsatz erzielt, kann der Anbieter nun aus einer Vielzahl von Dienstleistern die Entwicklung einer individuell entwickelten Applikation kaufen, also eine Programmsteuerung, die über ein Interface auf seinem Webserver Benutzerrechte verwaltet, Transaktionen abwickelt und die Inhalte nebenbei auch noch in HTML-Dokumenten darstellen kann. Diese Möglichkeit eröffnet zwar den Vorteil, dass sie individuell auf den Kunden zugeschnittene Lösungen bietet, allerdings auch den Nachteil, dass sie sehr teuer in der Anschaffung sind und es wäre nicht praktikabel, dass jeder Anbieter von Dateien eine individuelle derartige Lösung entwickeln lässt.

Zudem ist nicht jeder Webspace, den man bei einem ISP mietet, für jede Technologie der Shoplösung geeignet, und entsprechende Eigenschaften müssen extra bezahlt und optional beim ISP zugekauft werden. Des weiteren kann weder der Dienstleister, der die Shoplösung realisiert, noch der ISP durch die Nutzung des Programmsteuerungs-Interface entstehenden potentiellen Risiken des unerlaubten Ausspionierens von Benutzer-, Konten-, Kennwort-, Kreditkarten-, Adressdaten etc. der Kunden oder eine ungewollte Veränderung des Inhaltes der Website vollkommen ausschließen. Es ist also für einen Anbieter nur in seltenen Fällen praktikabel, eine Shoplösung für seine persönlichen Belange zu programmieren und zu administrieren. Des weiteren ist eine solche Shoplösung nur unter großer Mühe mit anderen Shops zum Austausch von Daten, etwa für Marketing-Zwecke, zu modifizieren.

Eine weitere Möglichkeit für den Anbieter von Dateien sind sogenannte File-sharing-Server im Internet, auf die der Benutzer die gewünschten Dateien überträgt, welche die Verwaltung der Nutzungsrechte mit einem standardisierten Interface zur Benutzer- und Transaktionsverwaltung durchführen.

Dieser Service ist ebenfalls allgemein anerkannter Stand der Technik und es gibt eine Vielzahl von Anbietern, die derartige Lösungen anbieten. Der Anbieter hält somit aber zwei Webspaces vor, die er auch administrieren muss. Den seiner eigenen Webseite, und den des Verwalters bzw. Verkäufers seiner Dateien. Dieser Service ist außerdem nur bis zu einem kleinen Ausmaß gratis. Fallen größere Dateimengen oder größere Volumina an übertragenen Daten zu Benutzern an, muss hier wieder eine zusätzliche Nutzungsgebühr entrichtet werden. Für den Anbieter derartiger Webservices wiederum ergibt sich der Nachteil, dass er die Dateien des Kunden unter seinem Webspace selber verwalten muss. Das bedeutet unter Umständen, dass ein nicht unerheblicher Speicherplatz zur Verfügung gestellt werden muss, was sich auf den administrativen und technischen Aufwand und letztlich auf die Kosten auswirkt. Außerdem muss der Anbieter des File-Sharing-Service auch ständig die Dateien des Kunden bereithalten, was für ihn einen enormen logistischen Aufwand bedeutet. Überdies ist ja durch das Angebot zum Verkauf von Dateien alleine noch lange nicht sicher gestellt, dass dadurch auch ein entsprechender Umsatz erzielt wird.

Den Betrieb von Speicherplatz zum Verkauf kann man durch Verwendung eines sogenannten "Proxy-Servers" einsparen, welcher den Datenstrom vom Anbieter zum Endnutzer in der Form umleitet, dass der Kunde den Inhalt nur über den Server des Verkäufers erhält. Dies hat allerdings immer noch den Nachteil, dass der Verkäufer bezüglich der Kapazitäten der über diesen Proxy-Server maximal gleichzeitig übertragbaren Datenmenge ein erhebliches Kostenrisiko auf sich nehmen muss (sog. "Flaschenhals"), und das Volumen der zu übertragenden Datenmenge auch als Kostenfaktor durch den Verkäufer zu kalkulieren ist.

Um derartige Kostenfaktoren zu optimieren, spezialisieren sich in letzter Zeit immer mehr Dienstleister, die für Anbieter Rechte an Dateien verwalten, auf verschiedene Inhaltstypen (Musik, Video, Bilder, Text, etc.). Exemplarisch sei das im Fall des Verkaufs und/oder der Verteilung von Musik ("Electronic Music Distribution", EMD) dargestellt. EMD-Anbieter verhandeln mit den Inhabern urheberrechtlich geschützter Werke (in diesem Fall unter anderem Kompositionen, Aufführungen, Arrangements, Aufnahmen oder Texte) bestimmte Bedingungen, unter welchen sie Angebote digitalisieren und im Internet Benutzern anbieten bzw. verkaufen.

Diese haben aber zwei gravierende Nachteile. Erstens sind diese Verträge wiederum nur mit Zwischenhändlern an Rechten, in der Regel jedoch nicht mit dem Urheber selbst, geschlossen. Der Urheber kann daher selten entscheiden, wie die Vergabe von Rechten an seinen Werken verwaltet wird, und dem Urheber entgeht ein nicht unerheblicher Teil der Einnahmen im Fall von Verkauf der Rechte an seinen Werken, da zunächst die Verwaltungskosten an seinen Werken durch Tonträgerhersteller, Vertriebsorganisationen und Verlagen gedeckt, und dann die Verwaltungskosten für den Betrieb der EMD-Services sowie die Kosten für die Werbung in verschiedenen Medien (unter anderem dem Internet) gedeckt werden müssen. Zudem besitzt keiner der größeren Anbieter im allgemeinen eine Funktion "Teilnehmen", mit welcher sich Anbieter von Dateien bereits unter Nutzung des Internet selbst registrieren können, und wie im Falle der oben beschriebenen File-Sharing-Server am EMD-Modell des Dienstleisters teilnehmen können. Diese Funktion geschieht "offline", also nicht über das Internet, des weiteren selten zwischen einzelnen Anbietern und dem EMD-Dienstleister, und kaum bei einer geringen zu erwartenden Stückzahl von Verkäufen.

Es gibt auch einzelne Speziallösungen für kleine Auflagen von schöpferischen Werken, für die EMD-Dienstleister die Digitalisierung und die Verwaltung der Rechte sowie deren Verkauf anbieten, und der Zugang alleine durch die Zusendung eines Datenträgers (CD-Rom, DAT etc.) und die Unterzeichnung eines Vertrages ermöglicht wird. Die grundsätzlichen Nachteile bleiben allerdings weiterhin bestehen, nämlich dass der EMD-Dienstleister eine nicht unerhebliche Menge an Speicherplatz benötigt, die bei kleinen Auflagen zu einem Großteil unausgelastet sind, und daher die finanziellen Konditionen verschlechtert. Außerdem benötigt der Anbieter nach wie vor seine eigene Website, um Benutzer des Internet auf sein Angebot aufmerksam zu machen.

Die Aufgabe dieser Erfindung ist also, einem Anbieter von digitalen Inhalten eine Möglichkeit zu schaffen, Benutzerrechte nach Bedarf zu vergeben bzw. zu verkaufen, sowie Kundenbeziehungen und Transaktionen abzuwickeln, wobei das alles möglichst ohne weiteren administrativen oder programmiertechnischen Aufwand ermöglicht werden soll. Der zu betreibende Aufwand für den Anbieter soll dabei hinsichtlich der technischen Umsetzung nur aus Standardkomponenten eines handelsüblichen Webservers zu bewältigen sein. Die Erfindung soll des weiteren die Authentifizierung berechtigter Benutzer und/oder eine optionale Bezahlung für den Erhalt der Datei realisieren. Die Dateien sollen dabei durch eine zentrale Stelle verwaltet werden, und mit einer speziellen Kodierung ihrer Adresse in nur einer Zeile HTML-Code in einer bestehenden Website mit dem Zusatznutzen Authentifizieren, Verwalten der Benutzung und Bezahlen ausgestattet sein.

Diese Ziele werden durch die Merkmale von Anspruch 1 erreicht. Anspruch 1 sieht hierbei ein Verfahren zur Zugangskontrolle auf Daten vor, die in Form von Dateien mit jeweils einer eindeutigen Kennzeichnung auf einem Speichermedium gespeichert sind, und auf die mithilfe dieser Kennzeichnung über ein Kommunikationsnetzwerk, das von zumindest einer Arbeitseinheit, insbesondere ein Server, und zumindest einer Endnutzereinheit gebildet wird, zugegriffen werden kann, wobei in einem ersten Verfahrensschritt der jeweiligen Kennzeichnung eine öffentliche Adresse zugeordnet wird, bei deren Anwahl der Endnutzer auf die Arbeitseinheit umgeleitet wird. Erfindungsgemäß ist hierbei vorgesehen, dass die Arbeitseinheit in zeitlich definierten Abständen auf das Speichermedium zugreift und eine modifizierte Kennzeichnung erstellt, wobei bei Anwahl der öffentlichen Adresse durch den Endnutzer im Falle dessen ausreichender Authorisierung von der Arbeitseinheit die modifizierte Kennzeichnung mitgeteilt wird, mithilfe derer dem Endnutzer bis zur nächsten Modifizierung der Kennzeichnung durch die Arbeitseinheit ein direkter Zugang auf die entsprechende Datei des Speichermediums ermöglicht wird. Beim Speichermedium kann es sich hierbei um einen Webserver, wie oben ausgeführt, handeln. Die Arbeitseinheit, insbesondere ein Server, wird sich in der Regel bei einem externen Serviceanbieter befinden, der für den Anbieter von Dateien, also dem Inhaber des Speichermediums gemäß Anspruch 1, die Verwaltung der Zugangskontrolle zu den Daten des Anbieters übernimmt.

In der praktischen Umsetzung überträgt dabei der Anbieter einer Datei die Datei auf einen Webserver seiner Wahl und versieht diese mit einem Namen seiner Wahl. Um die Zugangskontrolle zu verwirklichen, kontaktiert er den Serviceanbieter. Diesem teilt er die Berechtigungskennung mit, mit welcher die Kennzeichnung der Dateien auf dem Webserver modifiziert werden kann. Der Serviceanbieter kontaktiert mittels der Berechtigung den Webserver und modifiziert den Dateinamen und somit die Kennzeichnung der Datei. Der Anbieter erhält in weiterer Folge einen kodierten Verweis (Link) als öffentliche Adresse, der die für den Endnutzer bestimmte Datei kennzeichnet. Verfolgt der Endnutzer diese öffentliche Adresse, wird er auf eine Serviceseite des Serviceanbieters verwiesen, mit deren Hilfe er die vom Anbieter definierten Benutzungsrechte erhalten kann. Hat der Endnutzer die vom Anbieter definierten Nutzungsrechte erhalten, erhält er die aktuelle, modifizierte Kennzeichnung der Datei und kann diese nun mit den Standardprotokollen und Clients lesend und/oder schreibend übertragen.

In definierten Zeitabständen, die etwa durch konstante Zeitintervalle oder durch das Eintreffen bestimmter Ereignisse wie etwa erfolgte "Downloads" definiert werden, wird die modifizierte Kennzeichnung der Datei wieder durch den Serviceanbieter geändert, und ist somit wieder für einen neuen Rechteerwerb für denselben oder einen anderen Endnutzer bzw. Nutzergruppen versteckt. Unter "Nutzer" bzw. "Nutzergruppen" werden im folgenden nicht nur natürliche oder juristische Personen, sondern auch Programme oder programmgesteuerte Maschinen verstanden.

Gemäß Anspruch 2 ist vorgesehen, dass die Modifizierung der Kennzeichnung durch Umbenennen, Kopieren oder Verschieben der Dateien auf dem Speichermedium, oder durch Übertragen auf ein weiteres Speichermedium erfolgt.

Anspruch 3 schlägt eine Ausführungsform zur Definition der zeitlichen Abstände vor, der zu Folge die Modifizierung der Kennzeichnung durch die Arbeitseinheit nach Beendigung des Datenzugriffes eines Endnutzers erfolgt. Damit sind die zeitlichen Abstände des Zugriffes der Arbeitseinheit auf das Speichermedium durch das Eintreffen bestimmter Ereignisse, wie etwa erfolgte "Downloads", definiert. Gemäß Anspruch 4 kann aber auch vorgesehen sein, dass die Modifizierung der Kennzeichnung durch die Arbeitseinheit in zeitlich konstanten Abständen erfolgt.

Gemäß Anspruch 5 ist vorgesehen, dass die Arbeitseinheit die Zuordnungen zwischen der ursprünglichen Kennzeichnung einer Datei des Speichermediums und ihrer öffentlichen Adresse zu der Arbeitseinheit sowie ihrer modifizierten Kennzeichnungen in einer Datenbank speichert.

Anspruch 6 schlägt eine Möglichkeit zur Überprüfung der Authorisierung des Endnutzers vor, indem die Authorisierung mithilfe Nutzernamens und Kennwortes oder durch Erwerb von Nutzerrechten durch Bezahlung erfolgt.

Anspruch 7 schlägt eine konkrete Ausführungsform vor, der zu Folge es sich bei dem Kommunikationsnetzwerk um das Internet, bei der Datei um eine URI (Uniform Resource Information) und bei der Kennzeichnung der Datei, ihrer modifizierten Kennzeichnungen sowie ihrer öffentlichen Adresse jeweils um unterschiedliche URLs (Uniform Resource Locators) handelt. Im Rahmen einer solchen Ausführungsform kann gemäß Anspruch 8 der Zugang und die Ausgabe von Daten vom Speichermedium mithilfe eines HTTP- und/oder FTP-Servers verwaltet werden. Selbstverständlich könnte aber auch etwa ein WAP-Server mit SSH oder Telnet eingesetzt werden.

Gemäß Anspruch 9 bewerkstelligt die Arbeitseinheit den Zugriff auf das Speichermedium sowie die Modifizierung der Kennzeichnung von Dateien auf dem Speichermedium mithilfe eines FTP-Protokolls. Anspruch 10 sieht schließlich vor, dass die der Adresse entsprechende URL ein zusätzliches Erkennungsmerkmal zur Auswertung durch den Applicationserver AS enthält, mithilfe dessen die entsprechende, modifizierte Kennzeichnung identifizierbar ist.

Die Erfindung wird im folgenden anhand der beiliegenden Zeichnungen näher beschrieben. Hierbei zeigen die
Fig. 1 ein Block- und Flussdiagramm zur Darstellung der Veröffentlichung eines über ein Kommunikationsnetzwerk abrufbaren Inhaltes (Datei) im Rahmen des erfindungsgemäßen Verfahrens,
Fig. 2 ein Block- und Flussdiagramm zur Darstellung des "lesenden" Abrufs von Daten durch einen Endnutzer im Rahmen des erfindungsgemäßen Verfahrens, und
Fig. 3 ein Block- und Flussdiagramm zur Darstellung des "schreibenden" Zugriffs von Daten durch einen Endnutzer im Rahmen des erfindungsgemäßen Verfahrens.

Eine Datei kann von einem Webserver WS im Internet oder einem anderen Kommunikationsnetzwerk nur zur Anzeige, zum abspielen oder zum lokalen Speichern abgerufen werden, wenn der Benutzer den genauen Speicherort und den exakten Dateinamen angibt (Adresse, URL). In der Regel besteht diese Adresse aus einer IP-Adresse und/oder einem eindeutig definierten Hostnamen und/oder einem virtuellen Directory und/oder einem realen und/oder virtuellen Dateinamen etwa im Format "www.IhreFirma.com/Verzeichnis/Dateiname.Dateiendung". Der Teil der Adresse "www.IhreFirma.com" bezeichnet den Hostnamen (Domain) und der Teil /Verzeichnis/ einen Unterordner im virtuellen Verzeichnis des Webservers WS. Das virtuelle Verzeichnis bildet einen Teil der physikalischen Speichermedien der Maschine des Webservers ab. So könnte die Datei "Dateiname.Dateiendung" dem physikalischen Speicherort /www/IhreFirma.com/html/Verzeichnis/Dateiname.Dateiendung zugeordnet sein. Der WS sucht die angefragte Datei nun unter dem virtuellen Verzeichnis des Webservers, also dem physikalischen Pfad /www/IhreFirma.com/html. Der Teil der Adresse nach dem Domainnamen beschreibt Unterverzeichnisse des virtuellen Verzeichnisses des Webservers, die mit physikalischen Unterverzeichnissen übereinstimmen können, aber nicht müssen.

Wird kein Dateiname spezifiziert, wird optional die sogenannte "Indexseite" aus dem Verzeichnis übertragen. Deren Dateinamen wird in der Konfiguration des WS hinterlegt, in der Regel index.htm oder index.html oder default.htm oder default.html. Ist keine "Indexseite" definiert, wird, falls in der Konfiguration des WS angegeben, eine Liste aller verfügbaren Dateien und Unterverzeichnisse im Verzeichnis im gewünschten Format an den Benutzer übertragen (Directory Listing).

Erfindungsgemäß ist vorgesehen, dass nicht durch den WS selber ein "Directory Listing" an den Benutzer übertragen wird. Optional kann aber ein "Directory Listing" durch den Serviceanbieter SA an den Endnutzer übertragen werden. Dies ist eine Einstellung, die in jedem Webserver WS einfach durch den Administrator vorzunehmen ist, und in der Regel sind Webserver WS in dieser Art konfiguriert. In diesem Fall wird eine Fehlermeldung "Datei nicht gefunden", "Keine Berechtigung zum Anzeigen des Verzeichnisses" oder ähnliches an den Endnutzer gesendet.

Gibt der Benutzer nun einen anderen Dateinamen an oder wählt im Browser einen Link zur Verfolgung und anschließendem Abrufen des hinterlegten Inhalts, wird dieser Inhalt nur übertragen, wenn der Dateiname und das Verzeichnis laut Konfiguration des Webservers WS exakt definiert und die Datei physikalisch als lesbar durch den Webserver WS definiert ist.

Wie noch genauer ausgeführt werden wird, ist erfindungsgemäß die Kennzeichnung (URL) einer abzurufenden Datei nur dem Serviceanbieter SA bekannt. Die genaue Kennzeichnung (URL) einer Datei kann nicht mittels "Wildcards" (Ersetzen einzelner Zeichen mit beliebigem Wert) oder Platzhalter (Ersetzen mehrerer Zeichen mit beliebigen Werten), z.B. in der Form Da?ei.??? oder D*.* oder *.* erraten werden, denn das widerspricht dem Grundkonzept eindeutig definierter URLs als jederzeit von allen Orten der Welt wiederholbar abrufbaren Inhalten. In anderen Worten ist unter den genannten Umständen eine Datei vor unbefugtem Benutzen solange geschützt, als deren exakte Kennzeichnung nicht von einem Endnutzer explizit angegeben wird.

Die letztere Eigenschaft ist wohlbekannt, und daher ist es nicht unüblich, Konfigurations- und oder Hilfsdateien einfach innerhalb des virtuellen Verzeichnisses zu hinterlegen, die möglicherweise durch den Webserver WS oder Hilfsprogramme des Webservers WS benötigt werden (Kennwörter, Zugangsinformationen für Datenbanken, Konfigurationsvariablen, etc). Es ist ein bekanntes Problem, dass böswillige Endnutzer versuchen, allgemein bekannte Konfigurationsdateien wie z.B. phpinfo.php abzurufen, weil diese möglicherweise von einem unachtsamen Administrator in einem öffentlichen Verzeichnis des Webservers WS hinterlegt wurden, und ein Versenden durch den Webserver WS nicht explizit in der Konfiguration des Webservers WS verhindert wird. Eine weitere bekannte Sicherheitslücke sind Verweise (LINKS) auf diese sensiblen Daten, die in irgendwelchen ebenfalls von außen verlinkten Dateien unbeabsichtigt hinterlassen wurden. Besonders gefährlich sind diese durch Hyperlinks erreichbaren sensiblen Dateien, da Suchmaschinen im Internet systematisch von Link zu Link alle öffentlich erreichbaren Dateien im Internet nach weiteren Links durchsuchen, und die so gefundenen Dokumente inhaltlich indexieren und katalogisieren. Es ist allerdings möglich, einzelne oder mehrere Dateien und/oder einzelne und/oder mehrere Verzeichnisse innerhalb des Webservers WS von einer Indexierung einer Suchmaschine auszunehmen. Dazu ist eine Datei "robots.txt" im Wurzelverzeichnis des Webservers WS zu hinterlegen, die diesbezügliche Informationen für den automatischen Indexierer beinhaltet. Daher wird auch im Logfile eines Webservers ein Besuch eines automatischen Indexierers als erstes durch eine Abfrage der Datei "www.IhreFirma.com/robots.txt" protokolliert. Ist diese Datei nicht vorhanden, erhält auch der Indexierer durch den Webserver WS eine Fehlermeldung "Datei nicht vorhanden". Danach lädt der Indexierer die Indexdatei unter "www.IhreFirma.com" und verfolgt alle in den Dokumenten und verlinkten Dokumenten gefundenen Hyperlinks (LINKS). Auch ein automatischer Indexierer kann eine nicht in einer URL (außer vielleicht einiger Standardseiten oder eben in einem Directory-Listing angezeigte Dokumente) mittels eines Links verknüpfte Datei NICHT abrufen.

Erfindungsgemäß werden somit Dateien innerhalb eines Webservers durch nicht-veröffentlichen der exakten Kennzeichnung (URL) versteckt, wie noch näher ausgeführt werden wird. Außer in einigen Standardfällen oder ungewollten Ausnahmen ist es nicht Stand der Technik, Dateien gezielt und/oder temporär durch ein Programm oder einen externen Serviceanbieter SA umzubenennen und/oder zu verschieben, zu kopieren, oder auf einem anderen Webserver WS zu übertragen um den Zugriff darauf zu limitieren.

Im folgenden wird nun ein Ausführungsbeispiel der Erfindung im Detail beschrieben.

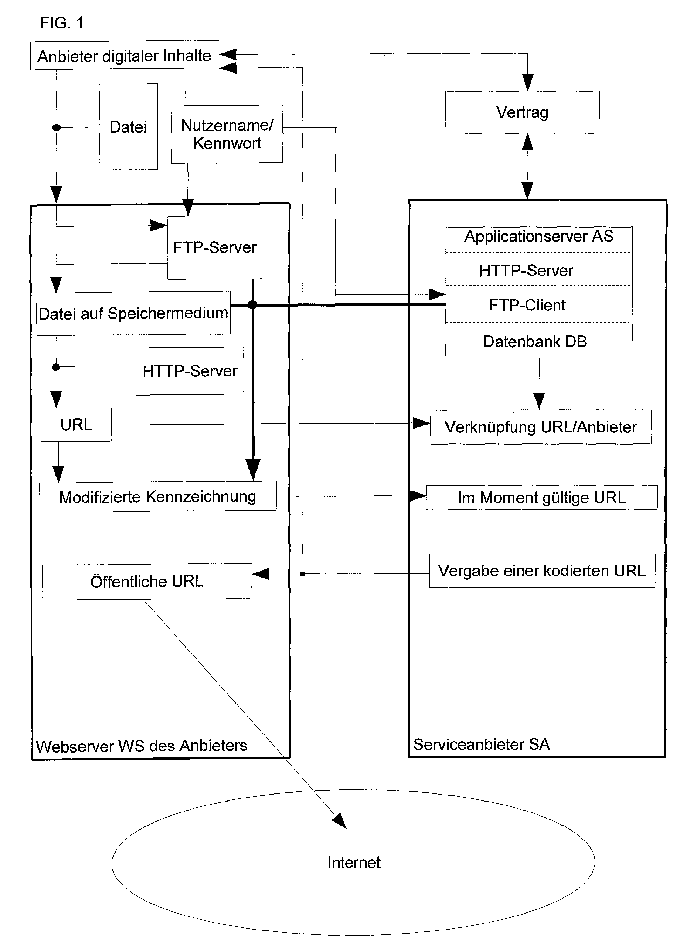

Ziel eines Anbieters ist zunächst die Veröffentlichung eines über ein Kommunikationsnetzwerk abrufbaren Inhaltes (Datei). Die hierzu erforderlichen Schritte sind in der Fig. 1 schematisch in Form eines Block- und Flussdiagramms dargestellt. Zu diesem Zweck ist ein Speichermedium WS für Dateien, die mithilfe einer eindeutigen Kennzeichnung gespeichert sind, und auf die mithilfe dieser Kennzeichnung über ein Kommunikationsnetzwerk zugegriffen werden kann, erforderlich (im folgenden auch Webserver, kurz WS, genannt). Dieser Webserver WS besteht in der Regel aus einer Maschine mit einer oder mehreren Programmsteuerungen zur Kommunikation zur und von einer Kommunikationseinrichtung in der Gestalt, dass über diese Kommunikationseinrichtung Informationen und/oder Dateien von einem Kommunikationsnetzwerk und in ein Kommunikationsnetzwerk übertragen werden können. Dieser Webserver WS kann, aber muss nicht von einem ISP (Internet Service Provider) zur Verfügung gestellt werden, braucht aber einen Anschluss über irgendeinen ISP an das Kommunikationsnetzwerk. Der Webserver WS kann allerdings auch vom Anbieter selbst oder einer oder mehreren anderen juristischen oder natürlichen Personen zur Verfügung gestellt werden und/oder von einem Serviceanbieter (SA).

Die materiellen Komponenten sowie die Programmsteuerung oder Programmsteuerungen des Webservers WS verfügen mindestens über folgende Einrichtungen :
A1) Einen Physikalischen Speicherort, der lesend und/oder schreibend verwendbar ist.
A2) Einen Serverprozess, der via Kommunikationsnetzwerk eintreffende Anfragen empfängt und entsprechende Antworten in das Kommunikationsnetzwerk zurück sendet in der Gestalt, dass der Empfänger der Antwort auch der Absender der Anfrage ist. Diese Anfragen sind Anforderungen nach Inhalten, die sich auf dem physikalischen Speicherort des Webservers WS selber und/oder physikalischen Speicherorten anderer Webserver WS befinden. Eine Anfrage ist in der Regel eine Uniform Resource Information URI, die unter Verwendung eines Protokolltyps nach dem ISO/OSI Modell an das Kommunikationsnetzwerk und somit den Absender der Anfrage ausgeliefert wird. Es kann sich, muss sich aber nicht, bei dem Kommunikationsnetzwerk um das Internet, einer Anfrage um eine URL und bei der Antwort um eine Datei handeln. Der Serverprozess ist im Allgemeinen ein HTTP-Server.
A3) Einen Authentifizierungs- und Verwaltungsmechanismus, über den es möglich ist, anderen das Recht "Lesen" und/oder "Schreiben" auf dem physikalischen Speicherort zu geben. In der Regel handelt es sich hierbei um Nutzerkonten mit Identifikationsfunktion (Nutzername/Kennwort, etc.).
A4) Ein Regelwerk, das es dem Serverprozess laut A2) ermöglicht, den Speicherort laut A1) auf eine angefragte URL abzubilden in der Gestalt, dass eine im Sinne der URL angefragte Datei, welche entsprechend diesem Regelwerk auf dem Speicherort gemäß A1) physikalisch vorhanden ist, in das Kommunikationsnetzwerk, also zum Absender, übertragen wird, wobei andernfalls eine Fehlermeldung zum Absender übertragen wird. Dieses Regelwerk beinhaltet die Regel, dass ein Abbild der Dateinamen und/oder Speicherorte gemäß A1) in Form von Directory Listing, Directory Index etc. nicht ausgeliefert wird. Ebenso besteht die Regel, dass Dateien nicht unter Verwendung von Abkürzungen für Dateinamen (wie z.B. yyy.* a?c.*, *.*, sogenannte "Wildcards") mittels URL-Anforderung ausgeliefert werden dürfen. Im Allgemeinen handelt es sich dabei um die Konfigurationseinstellungen eines HTTP-Servers. Eine URL könnte zum Beispiel die Form http://www.IhreFirma.com/Verzeichnis/Dateiname.Dateiendung haben. Wie bereits erwähnt wurde, bezeichnet der Teil "http://" das laut ISO/OSI Modell zu verwendende Protokoll http (HyperText Transfer Protocol). Der Teil der Adresse "www.IhreFirma.com" bezeichnet den Hostnamen (Domain) und der Teil /Verzeichnis/ einen Unterordner im virtuellen Verzeichnis des Webservers WS. Das virtuelle Verzeichnis / (Wurzelverzeichnis) des Webservers bildet einen Teil der physikalischen Speichermedien des Webservers WS ab. Ein Hostname kann auch in Form der IP-Adresse direkt angegeben werden. So könnte das virtuelle Verzeichnis / des Webservers www.IhreFirma.com dem physikalischen Speicherort /www/IhreFirma.com/html zugeordnet sein. So wäre also die Datei "Dateiname.Dateiendung" dem physikalischen Speicherort /www.IhreFirma.com/html/Verzeichnis/Dateiname.Dateiendung zugeordnet. Der Webserver WS sucht die angefragte Datei nun unter dem virtuellen Verzeichnis des Webservers, also unterhalb dem physikalischen Pfad /www/IhreFirma.com/html. Die Datei wird also im Unterverzeichnis /Verzeichnis des Webservers auf dem Speicherort unter /www/IhreFirma.com/html/Verzeichnis gesucht und so zur Auslieferung durch den Webserver WS gefunden. Der Teil der Adresse nach dem Domainnamen und vor dem "Dateinamen.Dateiendung" beschreibt Unterverzeichnisse des virtuellen Verzeichnisses des Webservers WS, die mit physikalischen Unterverzeichnissen übereinstimmen können, aber nicht müssen.
A5) Einen Serverprozess, der es ermöglicht, Dateien über ein Kommunikationsnetzwerk auf den physikalischen Speicherort laut A1) zu übertragen, zu verschieben, zu kopieren, umzubenennen, zu löschen, oder Verzeichnisinhalte auszulesen oder Verzeichnisse zu erstellen, umzubenennen oder zu löschen. In der Regel handelt es sich hierbei um einen FTP-Server.

Der Anbieter schließt nun einen Vertrag mit einem Betreiber eines Webservers WS (etwa ein Internet Service Provider ISP) ab, oder betreibt selber einen Webserver WS, der an ein Kommunikationsnetzwerk eines ISP angeschlossen ist, um einen über ein Kommunikationsnetzwerk öffentlich abrufbaren Speicherort (Webspace) zu erhalten. Auf dem Webserver WS wird nun ein Nutzerkonto gemäß A3) angelegt und ein Speicherort gemäß A1) für Dateien des Nutzerkontos gemäß A3) zugeordnet.

Dieser physikalische Speicherort gemäß A3) wird nun in das Regelwerk gemäß A4) eingetragen, um dem Serverprozess gemäß A2) Dateien des Anbieters mittels Anfrage von URLs durch Absender aus dem Kommunikationsnetzwerk zurück zum Absender über das Kommunikationsnetzwerk zu übertragen. In weiterer Folge erfolgt das Einrichten eines Authorisierungsystems, mit dem der Anbieter über ein Kommunikationsnetzwerk Zugang zu seinem Nutzerkonto gemäß A3) und somit zu seinem Speicherplatz gemäß A1) erhält (z.B. FTP-Server mit Authentifizierung durch Benutzername/Kennwort). Die Methoden und notwendigen Apparate (Programme) zum Übertragen, Verschieben, Kopieren, oder Löschen der Dateien auf den Speicherort über ein Kommunikationsnetzwerk sowie die zugehörigen Authorisierungsinformationen werden dem Anbieter mitgeteilt (FTP-Zugang).

Falls der Anbieter berechtigt ist Dateien auf den Webserver WS zu übertragen, verwendet er Methoden und Apparate, um Dateien auf den Speicherort gemäß A1) des Webservers WS zu übertragen. Diese Methoden bestehen etwa im Kopieren/Verschieben innerhalb des Dateisystems, Wechseln von Datenträgern, Anschließen weiterer Geräte, in der Verwendung eines FTP-Client, um Dateien über ein Kommunikationsnetzwerk zum FTP-Server gemäß A5) des Webservers WS zu übertragen, etc. In weiterer Folge legt der Anbieter die physikalische Anordnung und/oder Kennzeichnung der Dateien auf dem Speicherort gemäß A1) fest (Dateinamen, Dateierweiterung, Verzeichnisname, Unterverzeichnisname, etc.). Ab jetzt stehen die vom Anbieter angebotenen Informationen über URLs, die sich später möglichst nicht mehr ändern sollten (sog. unerwünschte "Dead Links"), mittels des Webservers WS jedem an das Kommunikationsnetzwerk angeschlossenen Endnutzer zum Abruf vom Speicherort gemäß A1) zur Verfügung.

Laut Regelwerk gemäß A4) können Endnutzer, die keine Kenntnis der festgelegten Dateiinformationen besitzen, auch die entsprechende URL eines Dokuments nicht anfordern und somit nicht in vom Anbieter unerwünschten Besitz von Dateien gelangen, obwohl sich diese im öffentlichen Speicherort des Webservers WS laut A1) und A4) befinden. Die Verfügbarkeit der angebotenen Dateien kann unter der entsprechenden URL nun veröffentlicht werden (Anmelden auf einem Webindex, Versenden von Mails, Werbung mit Banner , Printmedien etc.).

Nun wird das erfindungsgemäße Belegen einer Datei mit Nutzerrechten näher beschrieben. Hierbei geht es darum, Nutzerrechte für "Lesen" und/oder "Schreiben" für einen oder mehrere auf einem Webserver WS gespeicherten und über ein Kommunikationsnetzwerk abrufbaren Inhalt (Datei oder Dateien) zu vergeben. Die hierzu erforderlichen Schritte sind ebenfalls in der Fig. 1 schematisch dargestellt.

Da es im Sinne dieser Erfindung ist, alle Schritte über das Internet abzuwickeln, ist der Vorgang hier über ein Webinterface des Serviceanbieters SA dargestellt. Die Kommunikation kann allerdings auch über Post, Telefon, e-Mail, etc. abgewickelt werden.

Zu diesem Zweck ist eine Arbeitseinheit, insbesondere ein Server (im folgenden "Applicationserver AS" genannt), erforderlich, die in der Regel aus einer Maschine mit einer oder mehreren Programmsteuerungen zur Kommunikation zur und von einer Kommunikationseinrichtung besteht in der Gestalt, dass über diese Kommunikationseinrichtung Informationen bzw. Dateien von einem Kommunikationsnetzwerk und in ein Kommunikationsnetzwerk übertragen werden können. Dieser Applicationserver AS kann, aber muss nicht von einem ISP (Internet Service Provider) zur Verfügung gestellt werden. Der Server AS kann allerdings auch vom Anbieter selbst, oder einer oder mehreren anderen juristischen oder natürlichen Personen zur Verfügung gestellt werden. Der Betreiber der Arbeitseinheit (Applicationserver AS) wird im folgenden als Serviceanbieter SA bezeichnet.

Die materiellen Komponenten sowie die Programmsteuerung oder Programmsteuerungen des Applicationservers SA verfügen mindestens über folgende Einrichtungen:
B1) Ein Datenverarbeitungssystem, und/oder Hash-Tables, und/oder Textfiles, und/oder Arrays, welche die programmgesteuerte Bearbeitung von Daten ermöglicht und in der Regel mithilfe von Datenbanken DB operiert.
B2) Einen oder mehrere Webserverprozesse gemäß der Beschreibung in A2) und A4), die im folgenden auch als Webinterface WI bezeichnet werden.
B3) Ein Programmsystem zum Übertragen und/oder Verschieben und/oder Kopieren und oder Umbenennen und/oder Löschen von Dateien auf einem Webserver WS oder zwischen mehreren Webservern WS über ein Kommunikationsnetzwerk. (FTP-Client)
B4) Einen oder mehrere Nutzerkonten gemäß der Beschreibung in A3) zur Verwaltung.
B5) Einen oder mehrere Administratoren oder ein Programmsystem zur Administration der Einrichtung.
B6) Einen Speicherort gemäß der Beschreibung in A1)
   Alle Einrichtungen können sich in einer oder mehreren Einheiten (Computern/Servern) befinden, welche über ein Kommunikationssystem miteinander verbunden sind.

Der Anbieter schließt einen Vertrag mit dem Serviceanbieter SA, der Betreiber einer Arbeitseinheit AS ist, ab, oder betreibt selber eine Arbeitseinheit AS, die an ein Kommunikationsnetzwerk angeschlossen ist, um Dateien auf einem über ein Kommunikationsnetzwerk erreichbaren Webserver WS mit durch die Arbeitseinheit AS zu verwaltenden Nutzerrechten zu versehen. Dies kann, muss aber nicht über das Webinterface WI der Arbeitseinheit AS geschehen. Für die Arbeitseinheit AS wird im folgenden auch der Ausdruck Applicationserver AS verwendet.

In der Datenbank DB gemäß B1) des Applicationserver AS wird durch den Administrator laut B5) oder vom Anbieter selbst über Kommunikation mit dem Webinterface gemäß B2) ein oder mehrere Nutzerkonten angelegt. Um sich als Anbieter beim Serviceanbieter SA über das optionale Webinterface WI des Applicationserver AS zu identifizieren, können dem Anbieter wahlweise Authorisierungsinformationen mitgeteilt werden. Dies geschieht mittels des Webinterface WI des Applicationserver AS, oder per Post, Telefon e-Mail, etc. Diese Information wird in der Datenbank DB nach B1) gespeichert. Dadurch ist jederzeit eine Zuordnung des Anbieters und seiner Authorisierungsinformationen möglich. Um die Nutzerrechte zu verwalten, wird dem Applicationserver AS vom Anbieter die Authorisierungsinformation für den Zugang zum Webspace des Anbieters gemäß A5) (FTP-Server des Webservers WS) mitgeteilt. Diesem Nutzerkonto wird nun von einem Administrator gemäß B5) oder dem Anbieter selbst, z.B. über das Webinterface WI des Applicationserver AS, eine oder mehrere zu verwaltende Dateien diesem Nutzerkonto zugeordnet.

Optional kann via FTP ein Directory-Listing, aus dem der Anbieter die zu verwaltenden Dateien auswählen kann, erstellt und angezeigt werden, oder der Anbieter gibt eine oder mehrere URLs der Dateien manuell ein, oder alle Dateien werden mittels FTP oder HTTP durch den Applicationserver AS automatisch in eine Liste der zu verwaltenden Dateien übernommen.

Nun nimmt der Applicationserver AS mit dem Webserver WS des Anbieters Kontakt auf, um zu überprüfen, ob die angegebenen URLs (welche öffentlich bekannt sein können aber nicht müssen) über ein Kommunikationsnetzwerk öffentlich abrufbar sind. (URL-Kontrolle). Sind die URLs nicht öffentlich abrufbar, erhält der Anbieter eine Fehlermeldung. Sind die URLs öffentlich abrufbar, werden diese URLs in der Datenbank DB laut B1) eingetragen.

In weiterer Folge können Endnutzer bzw. Endnutzergruppen, für welche die Nutzerrechte durch den Serviceanbieter SA zu verwalten sind, festgelegt werden. Dies sind zum Beispiel "alle", "alle mit folgender Benutzernamen/Passwort-Kennung", "alle mit den folgenden IP-Adressen oder e-mail-Adressen", "alle Besitzer eines Gutscheincodes", oder andere registrierte Endnutzer. Diese Informationen werden in der Datenbank DB gespeichert. Des weiteren können Nutzerrechte für "Lesen" und/oder "Schreiben" für definierte Endnutzer oder Nutzergruppen festgelegt werden.

Für die Nutzer oder Nutzergruppen wird nun ein Modus festgelegt, wie diese den Besitz der Rechte nachweisen oder erwerben können (Post, Telefon, E-Mail, Benutzername/Kennwort, Senden einer SMS-Nachricht, PublicKey, Bezahlen eines Preises, etc.). Authorisierungsinformationen können z.B. eine oder Kombinationen mehrerer der folgenden Optionen umfassen:
Option 1: Einmalige Authorisierungserlaubnis durch den Serviceanbieter SA
Option 2 : Mehrmalige Authorisierungserlaubnis durch den Serviceanbieter SA
Option 3 : Angabe eines Nutzers oder mehrerer Nutzer in einer oder mehreren Gruppen, die einmalige und/oder mehrmalige Autorisierungserlaubnis erhalten (z.B. über die email-Adressen der Nutzer).

Nun nimmt der Applicationserver AS mittels seines FTP-client gemäß B3) Kontakt zum FTP-Server des Webservers WS gemäß A5) auf, authorisiert sich, und überprüft, ob die bereitgestellten Dateien modifiziert werden können (über Kopieren, Umbenennen, Verschieben, Löschen, etc.). Falls das nicht der Fall ist, erhält der Anbieter eine Fehlermeldung, und die Kommunikation wird beendet. Die Dateien können nicht mit Nutzerrechten versehen werden. Falls das aber der Fall ist, können diese Dateien mit Nutzerrechten versehen werden. In weiterer Folge ändert der Applicationserver AS nun die Dateien in der Gestalt, dass er sie physikalisch auf dem Speicherort gemäß A1) umbenennt, neue Verzeichnisse anlegt, löscht, in andere Verzeichnisse verschiebt und/oder kopiert, und/oder auf einen optionalen anderen Webserver WS2 mit einer ähnlichen Authorisierung, die der Anbieter dem Applicationserver AS mitgeteilt hat, über den FTP-Zugang gemäß B5) überträgt. Optional kann der Anbieter selbst im optionalen Webinterface auswählen, ob neue Verzeichnisse angelegt und/oder gelöscht werden sollen, und ob die mit Rechten zu versehende Datei kopiert, verschoben, und/oder auf einen anderen Webserver WS übertragen werden soll.

Dadurch verändert sich nun die Kennzeichnung (URL) einer Datei gemäß der Regeln wie in A4) beschrieben. Diese Änderungen an der Datei oder den Dateien werden in der Datenbank DB eingetragen, in der Gestalt, dass eine Beziehung zwischen der modifizierten Kennzeichnung (URL) und der ursprünglichen Kennzeichnung (URL) herstellbar wird.

Durch die Regeln gemäß A4) ist sichergestellt, dass kein unauthorisierter Nutzer diese Dateien mittels aktiver oder passiver URL-Anfrage über ein Kommunikationsnetzwerk abrufen kann, wenn er nicht in Kenntnis der modifizierten Kennzeichnung (URL) ist.

Der Applicationserver AS stellt nun seinerseits dem Endnutzer eine öffentliche Adresse für diese Datei (URL-Information) zur Verfügung, die auf Anfrage einer geschützten Datei zu einem Authorisierungssystem des Applicationserver AS führt.

Diese öffentliche Adresse (URL) enthält wahlweise eine kodierte Information (sog. Token), mit dessen Hilfe der Applicationserver AS auf Anfrage die modifizierte URL der Datei durch Anfrage an die Datenbank DB exakt identifizieren kann.

Die Kommunikation mit dem Serviceanbieter SA kann nun beendet werden.

Selbstverständlich kann der Anbieter die vergebenen Authorisierungsinformationen jederzeit ändern oder löschen. Dies geschieht mittels des Webinterface WI des Applicationserver AS oder per Post, Telefon e-Mail, etc., und zwar nach Authorisierung durch Identifizierung seines Nutzerkontos.

Wurde die Originaldatei durch den Applicationserver AS verändert (z.B. wie oben beschrieben durch Übertragen, Verschieben, Kopieren, Umbenennung, Löschen, etc.), ist sie nun nicht mehr durch ihre ursprüngliche Kennzeichnung (URL) erreichbar. Wurde die Datei kopiert, ist es Aufgabe des Anbieters, entweder die ursprüngliche Kennzeichnung nicht bekannt zu geben, oder die Originaldatei zu löschen. Die Veröffentlichung der Dateien des Anbieters, die somit geschützt wurden, geschieht nun durch den Anbieter mittels Bekanntgabe der vom Applicationserver AS vergebenen, öffentlichen Adresse.

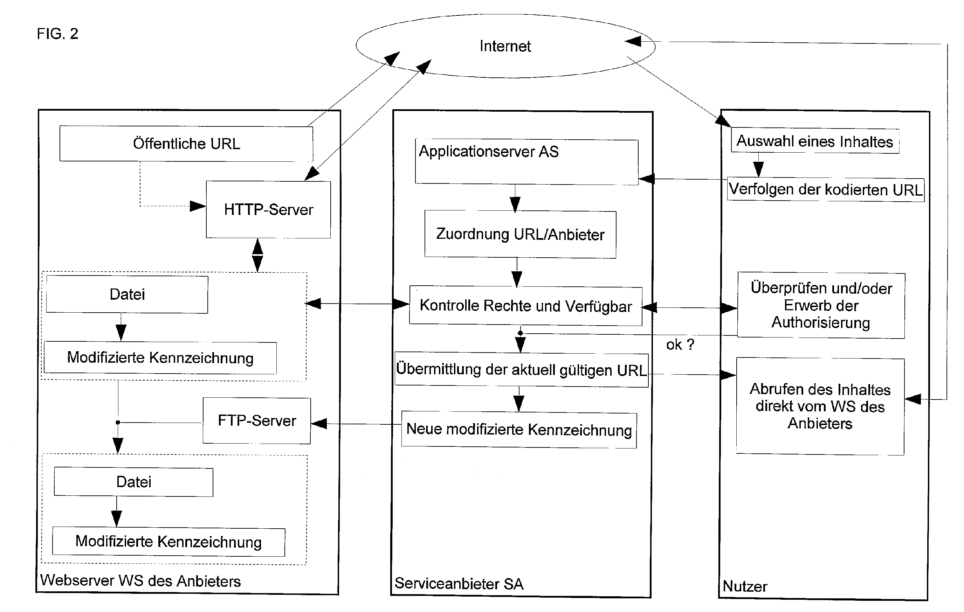

Im folgenden wird nun der "lesende" Abruf von Daten durch einen Endnutzer beschrieben. Die hierzu erforderlichen Schritte sind in der Fig. 2 schematisch in Form eines Block- und Flussdiagramms dargestellt.

Hat ein Anbieter eine Datei mit Nutzerrechten, die durch den Serviceanbieter SA verwaltet werden, versehen, und gibt es keine öffentliche Kenntnis der Kennzeichnung (URL) bzw. der im Moment gültigen, modifizierten Kennzeichnung (URL) der Datei, sondern nur einen Verweis auf den Applicationserver AS mittels der öffentlichen Adresse, ist zunächst beim Serviceanbieter SA über ein optionales Webinterface WI beim Applicationserver AS ein Nutzerrecht zu erwerben bzw. zu verifizieren. Da es wiederum im Sinne dieser Erfindung ist, alle Schritte über das Internet abzuwickeln, ist der Vorgang hier über ein Webinterface WI des Serviceanbieters SA dargestellt. Die Kommunikation kann allerdings auch über Post, Telefon, e-Mail, etc. abgewickelt werden.

Das Abrufen einer Datei geschieht mittels Anfrage an einen Webserver WS durch aktives oder passiver Verfolgen eines Hyperlinks/URL. Dies kann geschehen durch Klicken eines Hyperlinks in einem Dokument (kann, muss aber kein HTML-Dokument sein), durch Auswahl aus einer Liste verfügbarer Hyperlinks, oder durch manuelle Eingabe einer URL in einem Programm, welches sich auf einem Terminal des Endnutzers befindet (Browser). Diese Anfrage wird über ein Kommunikationsnetzwerk an einen Webserver WS geleitet, der die abgefragte Information über das Kommunikationsnetzwerk zurück sendet.

Ist diese URL eine vom Serviceanbieter SA ausgegebene, öffentliche Adresse einer zugangskontrollierten Datei, führt diese Anfrage zum Serviceanbieter SA des Anbieters. Durch eine wahlweise Kodierung dieser Adresse, oder durch eine zuvor abgespeicherte Zuordnung kann der Serviceanbieter SA den Anbieter und/oder die entsprechende, modifizierte Kennzeichnung (URL) der angefragten Ressource durch Abrufen aus der Datenbank DB laut B1) ermitteln.

Der Serviceanbieter SA prüft zunächst durch Auswertung der Datenbank DB, ob die unter der mit einer Zugangskontrolle versehene Adresse angefragte Datei tatsächlich zum aktuellen Zeitpunkt mit dem Nutzerrecht "lesen" ausgestattet ist. Falls dieser Datei das Nutzerrecht "lesen" im Moment nicht durch den Anbieter zugeordnet ist, erhält der Endnutzer eine Fehlermeldung, und die Kommunikation wird beendet. Falls die entsprechende Datei lesbar ist, wertet der Serviceanbieter SA nun die Datenbank DB aus, um die dieser öffentlichen Adresse zugeordnete, im Moment gültige, modifizierte Kennzeichnung (URL) zu ermitteln.

Nun überprüft der Applicationserver AS des Serviceanbieters SA, ob die Datei tatsächlich unter der im Moment gültigen, modifizierten Kennzeichnung (URL) über ein Kommunikationsnetzwerk abrufbar ist. Falls diese Datei zu diesem Zeitpunkt nicht über ein Kommunikationsnetzwerk mit dem in der im Moment gültigen, modifizierten Kennzeichnung (URL) spezifizierten Protokoll abrufbar ist, erhält der Nutzer eine Fehlermeldung, und die Kommunikation wird beendet. Ist die Datei im Moment über ein Kommunikationsnetzwerk abrufbar, erhält der Nutzer die Möglichkeit, seine Berechtigungen zur Übertragung (download) der Datei auf sein Terminal (Browser) durch Angabe von Authorisierungsinformationen (z.B. Nutzername/Kennwort) zu verifizieren, oder die Nutzerrechte z.B. durch Bezahlung zu erwerben. Die Nutzerrechte umfassen in diesem Falle eine oder eine Kombination mehrerer der folgenden Optionen:
Option 1 : Einmalige Leseerlaubnis für den Nutzer
Option 2 : Mehrmalige Leseerlaubnis für den Nutzer

Die Authorisierungsinformation kann der Nutzer auch durch den Serviceanbieter oder durch den Anbieter per Post, e-Mail, Telefon, etc. erhalten haben. Die Identifizierung des Nutzers kann unter anderem mittels Benutzernamen/Kennwort, PublicKey, IP- oder E-mail-Adresse, Telefonnummer, etc., erfolgen. Optional erhält der Nutzer die Möglichkeit, ein Nutzerkonto beim Serviceanbieter SA einzurichten, oder sich durch Identifikationsmechanismen als Besitzer eines Nutzerkontos zu identifizieren.

Kann der Nutzer den Besitz der Nutzerrechte, wie sie vom Anbieter und/oder dem Serviceanbieter SA vergeben wurden, und wie sie durch den Serviceanbieter SA in der Datenbank DB laut B1) gespeichert werden, nicht nachweisen oder will diese nicht erwerben, wird die Kommunikation mit dem Nutzer abgebrochen.

Kann der Nutzer den Besitz der Nutzerrechte, wie sie vom Anbieter und/oder dem Serviceanbieter SA vergeben wurden, und wie sie durch den Serviceanbieter SA in der Datenbank DB laut B1) gespeichert werden, nachweisen bzw. hat er diese erworben, wird die Kommunikation mit dem Nutzer fortgesetzt. Eine Bezahlfunktion kann dabei etwa als Lastschrift für den Erwerb einer Datei, sowie als Gutschrift für die Lieferung einer Datei funktionieren. Die Bezahlung kann in Geldwert und/oder handelbaren bzw. in Geld umtauschbaren Guthabeneinheiten realisierbar sein, die positive oder negative Kontostände ermöglichen.

Der Nutzer erhält in weiterer Folge die im Moment gültige, modifizierte Kennzeichnung (URL) der Datei mitgeteilt (etwa über ein HTML-Dokument, e-Mail, SMS, etc.).

Ein Verfolgen dieser im Moment gültigen, modifizierten Kennzeichnung (URL) durch aktive Eingabe oder passive Auswahl in Form von Klicken eines Hyperlinks in einem Dokument (kann, muss aber kein HTML-Dokument sein), oder durch Auswahl aus einer Liste verfügbarer Hyperlinks in einem Programm, welches sich auf einem Terminal des Nutzers befindet (Browser), wird der Nutzer zu einer Anfrage nach einer exakt definierten Ressource unter einer URL des Webservers WS des Anbieters geführt, die unter Nutzung der Regeln gemäß A4) vom Speicherort A1) abgerufen und über ein Kommunikationsnetzwerk an den Nutzer übertragen werden kann (download).

Nach einem zeitlich definierten Abstand, der etwa durch eine Empfangsbestätigung durch den Nutzer, oder den Abschluss des Downloads, oder eines anderen, spezifizierten Ereignisses gegeben ist, wird die im Moment gültige, modifizierte Kennzeichnung (URL) der Datei erfindungsgemäß wiederum geändert. Optional wird die Anfrage bzw. der Download in der Datenbank DB gespeichert, und steht dem Anbieter zur Auswertung zur Verfügung. Wahlweise wird der Anbieter per Post, e-Mail, Telefon, etc., über diesen Vorgang informiert.

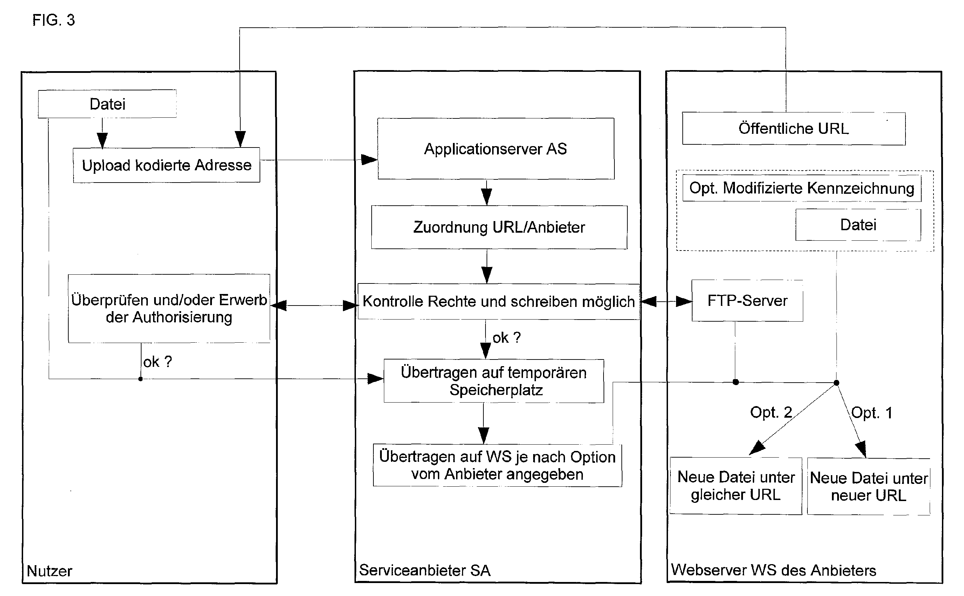

Im folgenden wird nun eine "schreibende" Anfrage durch einen Endnutzer beschrieben. Die hierzu erforderlichen Schritte sind in der Fig. 3 schematisch in Form eines Block- und Flussdiagramms dargestellt (die in Fig. 3 verwendete Abkürzung "opt." steht hierbei für "optional").

Hierbei besteht das Ziel eines Nutzers im Abspeichern einer oder mehrerer Dateien auf einem Webserver WS. Hat allerdings ein Anbieter eine Datei mit Nutzerrechten, die durch den Serviceanbieter SA verwaltet werden, versehen, und gibt es keine öffentliche Kenntnis der Kennzeichnung (URL) bzw. der im Moment gültigen, modifizierten Kennzeichnung (URL), sondern nur einen Verweis auf den Applicationserver AS, ist zunächst beim Serviceanbieter SA über ein optionales Webinterface beim Applicationserver AS ein Nutzerrecht zu erwerben bzw. zu verifizieren.

Da es wiederum im Sinne dieser Erfindung ist, alle Schritte über das Internet abzuwickeln, ist der Vorgang hier über ein Webinterface WI des Serviceanbieters SA dargestellt. Die Kommunikation kann allerdings auch über Post, Telefon, e-Mail, etc., abgewickelt werden.

Das Abrufen einer Datei geschieht mittels Anfrage an einen Webserver WS durch aktives oder passives Verfolgen eines Hyperlinks/URL. Dies kann durch Klicken eines Hyperlinks in einem Dokument (kann, muss aber kein HTML-Dokument sein) geschehen, durch direkte manuelle Eingabe eines Hyperlinks oder durch Auswahl aus einer Liste verfügbarer Hyperlinks in einem Programm, welches sich auf einem Terminal des Nutzers befindet (Browser). Diese Anfrage wird über ein Kommunikationsnetzwerk an einen Webserver WS geleitet, der die abgefragte Information über das Kommunikationsnetzwerk zurück sendet. Ist diese URL eine vom Serviceanbieter SA ausgegebene und mit einer Zugangskontrolle versehene Adresse (URL), führt diese Anfrage zum Serviceanbieter SA des Anbieters. Durch eine wahlweise Kodierung dieser Adresse, oder durch eine zuvor abgespeicherte Zuordnung, kann der Serviceanbieter SA den Anbieter und/oder die entsprechende, modifizierte Kennzeichnung (URL) der angefragten Ressource durch Abrufen aus der Datenbank DB ermitteln.

Der Serviceanbieter SA prüft zunächst durch Auswertung der Datenbank DB gemäß B1), ob die unter der öffentlichen und mit einer Zugangskontrolle versehene Adresse angefragte Datei tatsächlich zum aktuellen Zeitpunkt mit dem Nutzerrecht "schreiben" ausgestattet ist. Falls durch den Anbieter das Nutzerrecht "schreiben" im Moment nicht zugeordnet ist, erhält der Nutzer eine Fehlermeldung, und die Kommunikation wird beendet.

Falls durch den Anbieter das Nutzerrecht "schreiben" im Moment zugeordnet ist, wertet der Serviceanbieter SA die Datenbank DB gemäß B1) aus, um jene im Moment gültige, modifizierte Kennzeichnung (URL) zu ermitteln, die der öffentlichen und mit einer Zugangskontrolle versehene Adresse zugeordnet ist.

Nun überprüft der Applicationserver AS des Serviceanbieters SA, ob es möglich ist, tatsächlich unter der im Moment gültigen, modifizierten Kennzeichnung (URL) über ein Kommunikationsnetzwerk mit dem vom Anbieter spezifizierten Protokoll (FTP) den upload einer Datei durchzuführen. Falls das nicht möglich ist, erhält der Nutzer eine Fehlermeldung, und die Kommunikation wird beendet.

Ist die Datei im Moment über ein Kommunikationsnetzwerk mit dem durch den Anbieter spezifizierten Protokollen und Authorisierungsinformationen gemäß A5) schreibbar, erhält der Nutzer eine Möglichkeit, seine Berechtigungen zur Übertragung (upload) der Datei über sein Terminal (Browser) durch Angabe von Authorisierungsinformationen (z.B. Nutzername/Kennwort) zu verifizieren, bzw. die Nutzerrechte z.B. durch Bezahlung zu erwerben. Die Nutzerrechte sind im Falle "schreiben" eine oder eine Kombination mehrerer der folgenden Optionen:
Option 1 : Einmalige Schreiberlaubnis für den Nutzer
Option 2 : Mehrmalige Schreiberlaubnis für den Nutzer

Die Authorisierungsinformation kann der Nutzer auch durch den Serviceanbieter SA, oder durch den Anbieter per Post, e-Mail, Telefon, etc. erhalten haben. Die Identifikation des Nutzers kann unter anderem mittels Nutzername/Kennwort, public key, IP-Adresse, e-Mail-Adresse, Telefonnummer etc., erfolgen. Optional erhält der Nutzer die Möglichkeit, ein Nutzerkonto beim Serviceanbieter SA einzurichten, oder sich durch Identifikationsmechanismen als Besitzer eines Nutzerkontos zu identifizieren.

Kann der Nutzer den Besitz der Nutzerrechte, wie sie vom Anbieter oder dem Serviceanbieter SA vergeben wurden, und wie sie durch den Serviceanbieter SA in der Datenbank DB laut B1) gespeichert werden, nicht nachweisen bzw. will diese nicht erwerben, wird die Kommunikation mit dem Nutzer abgebrochen.

Kann der Nutzer den Besitz der Nutzerrechte, wie sie vom Anbieter oder dem Serviceanbieter SA vergeben wurden, und wie sie durch den Serviceanbieter SA in der Datenbank DB gemäß B1) gespeichert werden, nachweisen bzw. hat diese erworben, wird die Kommunikation mit dem Nutzer fortgesetzt.

Auf dem Applicationserver AS des Serviceanbieters SA wird dem Nutzer ein temporärer Speicherplatz, vergleichbar gemäß der Beschreibung von A1) und A4), zugewiesen, der es erlaubt, eine Datei über ein Kommunikationsnetzwerk zu übertragen und schreibend zu speichern (upload).

Nun verwendet der Applicationserver AS des Serviceanbieters SA die oben angegebenen Methoden und Apparate gemäß A5) (z.B. FTP-Client), um die Datei auf den Webserver WS des Anbieters zu übertragen. Dabei gelten eine oder mehrere der folgenden Optionen bzw. Regeln :
1. Ist die Datei noch nicht vorhanden, wird eine neue Datei angelegt.
2. Ist die Datei vorhanden, wird die vorhandene durch die neue Datei ersetzt, oder eine neue Datei angelegt, bzw. wird die bestehende Datei modifiziert.

Dies wirkt sich so aus, dass nur im Fall des Ersetzens einer Datei die im Moment gültige, modifizierte Kennzeichnung (URL) gleich bleiben kann, aber nicht muss. In allen anderen Fällen entsteht eine neue, modifizierte Kennzeichnung, bzw. wird die bestehende Kennzeichnung geändert. Alle diese Fälle sind entweder durch den Anbieter zu reglementieren, oder durch den Nutzer selbst. In jedem Fall werden alle relevanten Informationen bezüglich einer Änderung der Kennzeichnung in der Datenbank DB gemäß B1) aufgezeichnet, und die Information entsprechend aktualisiert.

Die neue oder geänderte Kennzeichnung (URL) verhält sich wie oben beschrieben, und steht ab sofort entweder verwaltet durch den Serviceanbieter SA, oder als öffentlich erreichbare URL zur Verfügung.

Der Nutzer erhält eine Status- bzw. Fehlermeldung, die ihn über den Erfolg oder Misserfolg des Vorgangs informiert.

Für den Fall, dass eine neue Datei auf dem Webserver WS des Anbieters mit oder ohne modifizierter Kennzeichnung entstanden ist, erhält der Nutzer die entsprechende, öffentliche Kennzeichnung mitgeteilt. Optional wird der Anbieter per Post, e-Mail, Telefon, etc., über die Modifikation seines Webservers WS durch einen Nutzer informiert. Wahlweise wird außerdem die Modifikation bzw. der Upload in der Datenbank DB gespeichert, und steht dem Anbieter zur Auswertung zur Verfügung. Damit ist die Kommunikation beendet.

Durch das erfindungsgemäße Verfahren ergeben sich daher insbesondere folgende Vorteile:
1. Durch eine zentrale Verwaltung der Administrationsdaten und Verwaltungsfunktion ist ein höherer Sicherheitsstandard möglich, als er bei einem handelsüblichen Webserver erreichbar wäre.
2. Diese spezielle, erfindungsgemäße Applikation auf einem zentralen Applicationserver, die unter einer Vielzahl von Bedingungen getestet und weiterentwickelt wird, bietet besseren Schutz als eine aus individuellen Komponenten entwickelte Einzellösung.
3. Anbieter von Verkaufsfunktionen für Dateien müssen nicht mehr unbedingt auch den Speicherort für die Dateien anbieten, und können somit Kosten sparen.
4. Anbieter von digitalen Inhalten können einfach eine Zugriffssteuerung realisieren, und sind im Speicherort der Dateien unabhängig von der Funktion der Administration und Verwaltung.
5. Gleichzeitiges Abrufen mehrerer Dateien durch mehrere Nutzer erfolgt dezentral und es entsteht kein "Flaschenhals" in Bezug auf die zu Übertragenen Datenmengen.
6. Der Anbieter digitaler, mit Nutzerrechten versehener Inhalte kann die Kosten dadurch minimieren, dass er erstens direkt von seiner eigenen Webseite, die er sowieso in den meisten Fällen vorhält, um auf sein Angebot aufmerksam zu machen, operieren kann. Zweitens kann er den zu erwartenden Umsatz beim Verkauf durch entsprechende Marketingmaßnahmen auf der eigenen Website selber verbessern. Drittens kann er bei ändernden Zugriffsvolumina selbst die auf dem Markt befindlichen Angebote "Datenvolumen" und "Speicherkapazität" optimal an seine Bedürfnisse anpassen.
7. Für den Serviceanbieter SA ergibt sich eine sehr kostengünstige Variante zum Verkauf digitaler Inhalte, die er zwar in numerisch hoher Zahl anbieten und verwalten kann, aber deren physikalische Rahmenbedingungen "Datenvolumen" und "Speicherkapazität" er anderen auf diese Dienstleistung spezialisierten Unternehmen überlassen kann.
8. Für den besonderen Fall Electronic Music Distribution - EMD kann so der Marktzugang für weniger bekannte Autoren zu einem günstigen Preis und bei niedrigem Investitionsrisiko angeboten werden.

Insbesondere erhält der Anbieter von digitalen Inhalten die Möglichkeit, Benutzerrechte nach Bedarf zu vergeben bzw. zu verkaufen, sowie Kundenbeziehungen und Transaktionen abzuwickeln, wobei das alles ohne weiteren administrativen oder programmiertechnischen Aufwand möglich ist. Der zu betreibende Aufwand für den Anbieter ist hinsichtlich der technischen Umsetzung nur aus Standardkomponenten eines handelsüblichen Webservers zu bewältigen. Die Erfindung realisiert des weiteren die Authentifizierung berechtigter Benutzer und/oder eine optionale Bezahlung für den Erhalt der Datei. Eine Bezahlfunktion kann dabei als Lastschrift für den Erwerb einer Datei, sowie als Gutschrift für die Lieferung einer Datei funktionieren. Die Bezahlung kann etwa in Geldwert und/oder handelbaren bzw. in Geld umtauschbaren Guthabeneinheiten realisiert werden, die positive oder negative Kontostände ermöglicht. Die Dateien werden dabei durch eine zentrale Stelle verwaltet, wobei sie mit einer speziellen Kodierung ihrer Adresse in nur einer Zeile HTML-Code in einer bestehenden Website mit dem Zusatznutzen Authentifizieren, Verwalten der Benutzung und/oder Bezahlen ausgestattet werden können.

## Patentansprüche

1. Verfahren zur Zugangskontrolle auf Daten, die in Form von Dateien mit jeweils einer eindeutigen Kennzeichnung auf einem Speichermedium WS gespeichert sind, und auf die mithilfe dieser Kennzeichnung über ein Kommunikationsnetzwerk, das von zumindest einer Arbeitseinheit AS, insbesondere ein Server, und zumindest einer Endnutzereinheit gebildet wird, zugegriffen werden kann, wobei in einem ersten Verfahrensschritt der jeweiligen Kennzeichnung eine öffentliche Adresse zugeordnet wird, bei deren Anwahl der Endnutzer auf die Arbeitseinheit AS umgeleitet wird, **dadurch gekennzeichnet, dass** die Arbeitseinheit AS in zeitlich definierten Abständen auf das Speichermedium WS zugreift und eine modifizierte Kennzeichnung erstellt, wobei bei Anwahl der öffentlichen Adresse durch den Endnutzer im Falle dessen ausreichender Authorisierung von der Arbeitseinheit AS die modifizierte Kennzeichnung mitgeteilt wird, mithilfe derer dem Endnutzer bis zur nächsten Modifizierung der Kennzeichnung durch die Arbeitseinheit AS ein direkter Zugang auf die entsprechende Datei des Speichermediums WS ermöglicht wird.

2. Verfahren zur Zugangskontrolle auf Daten nach Anspruch 1, **dadurch gekennzeichnet, dass** die Modifizierung der Kennzeichnung durch Umbenennen, Kopieren oder Verschieben der Dateien auf dem Speichermedium WS, oder durch Übertragen auf ein weiteres Speichermedium WS erfolgt.

3. Verfahren zur Zugangskontrolle auf Daten nach Anspruch 1 oder 2, **dadurch gekennzeichnet, dass** die Modifizierung der Kennzeichnung durch die Arbeitseinheit AS nach Beendigung des Datenzugriffes eines Endnutzers erfolgt.

4. Verfahren zur Zugangskontrolle auf Daten nach Anspruch 1 oder 2, **dadurch gekennzeichnet, dass** die Modifizierung der Kennzeichnung durch die Arbeitseinheit AS in zeitlich konstanten Abständen erfolgt.

5. Verfahren zur Zugangskontrolle auf Daten nach einem der Ansprüche 1 bis 4, **dadurch gekennzeichnet, dass** die Arbeitseinheit AS die Zuordnungen zwischen der Kennzeichnung einer Datei des Speichermediums WS und ihrer öffentlichen Adresse zu der Arbeitseinheit AS sowie ihrer modifizierten Kennzeichnungen in einer Datenbank DB speichert.

6. Verfahren zur Zugangskontrolle auf Daten nach einem der Ansprüche 1 bis 5, **dadurch gekennzeichnet, dass** die Authorisierung mithilfe Nutzernamens und Kennwortes oder durch Erwerb von Nutzerrechten durch Bezahlung erfolgt.

7. Verfahren zur Zugangskontrolle auf Daten nach einem der Ansprüche 1 bis 6, **dadurch gekennzeichnet, dass** es sich bei dem Kommunikationsnetzwerk um das Internet, bei der Datei um eine URI (Uniform Resource Information) und bei der Kennzeichnung der Datei, ihrer modifizierten Kennzeichnungen sowie ihrer öffentlichen Adresse jeweils um unterschiedliche URLs (Uniform Resource Locators) handelt.

8. Verfahren zur Zugangskontrolle auf Daten nach Anspruch 7, **dadurch gekennzeichnet, dass** der Zugang und die Ausgabe von Daten vom Speichermedium WS mithilfe eines HTTP- und/oder FTP-Servers verwaltet wird.

9. Verfahren zur Zugangskontrolle auf Daten nach Anspruch 7 oder 8, **dadurch gekennzeichnet, dass** die Arbeitseinheit AS den Zugriff auf das Speichermedium WS sowie die Modifizierung der Kennzeichnung von Dateien auf dem Speichermedium WS mithilfe eines FTP-Protokolls bewerkstelligt.

10. Verfahren zur Zugangskontrolle auf Daten nach einem der Ansprüche 7 bis 9, **dadurch gekennzeichnet, dass** die der Adresse entsprechende URL ein zusätzliches Erkennungsmerkmal zur Auswertung durch den Applicationserver AS enthält, mithilfe dessen die im Moment gültige, modifizierte Kennzeichnung identifizierbar ist.
